# DEMANDE DE BREVET EUROPEEN

(11) **EP 1 683 950 A1**
(43) Date de publication de la demande: **26.07.2006**
(21) Numéro de dépôt: 05301088.0
(22) Date de dépôt: 20.12.2005
(51) Int. Cl.: F02B 23/06

(54) **Moteur à combustion interne comportant un piston dont le bossage du bol de combustion est muni d'une zone évidée**

(30) Priorité: 30.12.2004 FR 0453239
(71) Demandeur: Renault, 92109 Boulogne Billancourt (FR)
(72) Inventeur: Levy, Franck, 91590 Guigneville sur Essone (FR)

(57) **Abrégé**

L'invention propose un moteur (10) comportant un cylindre (12) d'axe vertical (X-X) dans lequel coulisse axialement un piston (14) qui comporte un bol de combustion (18), une culasse (24) qui porte un injecteur (26) qui est excentré par rapport à l'axe (X-X) et qui pulvérise le carburant sous la forme d'une nappe d'injection (28) formée de plusieurs jets dissymétriques (30) qui parcourent des longueurs différentes avant d'entrer en contact avec la paroi interne (32) du bol (18) constituée par une gorge annulaire latérale (34) qui, centrée sur un axe principal de symétrie (A-A), se raccorde avec un fond (36) horizontal à partir duquel s'étend verticalement un bossage (38), caractérisé en ce que le bossage (38) comporte dans sa paroi externe (56) une zone évidée (58) délimitée par une surface concave (60) s'étendant sur un secteur angulaire (β) déterminé, centré sur l'axe principal A-A, qui correspond sensiblement au secteur angulaire de la nappe d'injection (28) comportant les jets (30) de plus courtes longueurs.

## Description

L'invention concerne un moteur à combustion interne à injection directe, comportant un piston dont le bossage du bol de combustion est muni d'une zone évidée.

On connaît de nombreux exemples de moteurs à combustion interne de ce type pour véhicule automobile, notamment à allumage par compression de type Diesel, et on cherche généralement à améliorer les performances de ces moteurs tout en réduisant d'une part leur consommation et, d'autre part, l'émission de polluants, tels que les oxydes d'azote (NOx) ou les particules comme les suies ou les fumées.

De telles améliorations peuvent notamment être obtenues en agissant sur la qualité du mélange entre les gaz d'admission et le carburant, c'est-à-dire en réalisant un mélange sensiblement homogène dans la chambre de combustion du cylindre du moteur, plus particulièrement dans le bol de combustion du piston.

Dans le cas d'un moteur à injection directe, les phénomènes principaux qui se combinent et qui permettent d'obtenir un mélange sensiblement homogène sont essentiellement la pulvérisation du carburant et les mouvements d'air du type "swirl" de la charge de gaz d'admission autour d'un axe sensiblement confondu ou parallèle à l'axe du cylindre, et encore le mouvement d'air provoqué par l'injection de carburant.

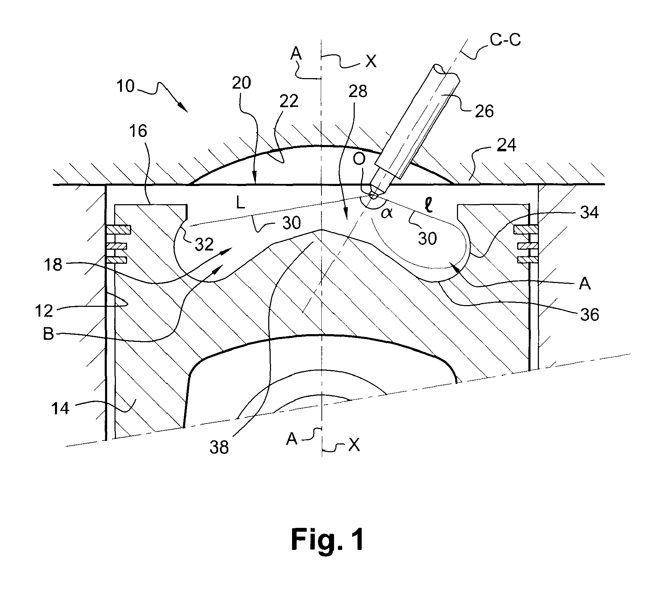

On a représenté à la figure 1, un cylindre de moteur à combustion interne à injection directe du type de celui décrit dans le document FR-A-2.844.012 illustrant un exemple de l'état de la technique.

Le moteur à combustion interne 10 comporte au moins un cylindre 12 d'axe vertical X-X dans lequel coulisse axialement un piston 14 qui comporte, dans sa face supérieure 16, un bol de combustion 18 délimitant la partie inférieure d'une chambre de combustion 20 dont la partie supérieure est délimitée par une portion en vis-à-vis de la face inférieure 22 d'une culasse 24 qui porte un injecteur 26 qui est excentré par rapport à l'axe X-X du cylindre 12 et qui pulvérise le carburant sous la forme d'une nappe d'injection 28 sensiblement conique formée de plusieurs jets dissymétriques 30 qui parcourent des longueurs différentes avant d'entrer en contact avec la paroi interne 32 du bol de combustion 18 constituée par une gorge annulaire latérale 34 qui, centrée sur un axe principal de symétrie A-A, se raccorde avec un fond 36 sensiblement horizontal de profondeur constante à partir duquel s'étend verticalement un bossage 38.

Il est connu que, dans un tel moteur 10, les caractéristiques du mélange "air/carburant" obtenues dans la chambre de combustion 20 dépendent directement de l'ouverture de la nappe, appelée "angle de nappe" (α), sous lequel le carburant est injecté dans la chambre de combustion 20 par l'injecteur 26 et de la géométrie complémentaire du bol de combustion 18 qui lui est associé.

L'invention concerne plus particulièrement les moteurs dans lesquels l'injecteur de carburant 26 est agencé dans une position excentrée par rapport à l'axe vertical X-X du cylindre 12, tels que généralement les moteurs à combustion interne comportant deux soupapes par cylindre afin de permettre l'implantation dans chaque cylindre d'une soupape d'admission et d'une soupape d'échappement de grand diamètre.

Lorsque l'injecteur 26 est ainsi excentré ou décentré, les différents jets 30 de carburant sont injectés de manière dissymétrique ce qui affecte notamment la qualité du mélange qui n'est pas aussi homogène que souhaité.

Comme on peut mieux le voir sur la figure 1, les jets de carburant 30 sont dissymétriques en ce qu'ils parcourent des longueurs différentes, encore appelées "longueurs libres", avant d'entrer en contact avec la paroi interne 32 du bol de combustion 18, plus précisément une partie des jets 30, dits longs, parcourent une longueur "L" tandis que l'autre partie des jets 30, dits courts, parcourent une longueur "I" avant d'entrer respectivement en contact avec la paroi interne 32 de la gorge 34.

Ainsi, le bol de combustion 18 comporte d'une part une première zone A majoritairement riche en carburant imputable au fait que les jets courts de longueur "1" sont confinés et s'enroulent sur eux-mêmes après être rentrés en contact avec la paroi 32 provoquant ainsi un recouvrement des jets et, d'autre part, une deuxième zone B proche du fond 36 dans laquelle les jets longs de longueur "L" pénètrent peu qui est majoritairement riche en air et pauvre en carburant.

Par conséquent, la dissymétrie des jets de carburant 30 provoquent un déséquilibre entre la répartition du carburant et des gaz d'admission de sorte qu'une telle géométrie de bol de combustion n'est pas satisfaisante.

En effet, un mélange air-carburant non homogène provoque notamment l'apparition de fumées.

C'est la raison pour laquelle, on a cherché à optimiser d'une part la géométrie et l'implantation des bols de combustion et, d'autre part, la répartition des jets de carburant pulvérisé par l'injecteur associé.

L'invention a pour but de remédier à ces inconvénients et de proposer un moteur à combustion interne comportant un piston dont le bol de combustion présente une géométrie permettant en particulier d'obtenir un mélange air-carburant homogène.

Dans ce but, l'invention propose un moteur à combustion interne du type décrit précédemment, caractérisé en ce que le bossage comporte dans sa paroi externe une zone évidée délimitée par une surface concave s'étendant sur un secteur angulaire déterminé, centré sur l'axe principal A-A, qui correspond sensiblement au secteur angulaire de la nappe d'injection comportant les jets de plus courtes longueurs de manière à permettre auxdits jets de se développer depuis la paroi interne de la gorge vers le bossage central du bol de combustion.

Grâce à l'invention, on améliore l'échange entre le carburant injecté et les gaz d'admission du moteur à combustion interne et on augmente les performances du moteur tout en réduisant la formation de polluants, tels que les oxydes d'azote (NOx), les suies et autres hydrocarbures imbrûlés constituant les fumées noires en sortie d'échappement.

Selon d'autres caractéristiques de l'invention :
- la surface concave de développement présente, en section par un plan de coupe vertical passant par l'axe principal A-A, un profil incliné dont la pente s'inscrivant dans la continuité du fond horizontal est déterminée de manière à éviter que les jets de plus courtes longueurs ne s'enroulent sur eux-mêmes en direction de la paroi interne de la gorge ;
- la surface concave de développement s'étend axialement sur tout ou partie de la hauteur du bossage ;
- le piston comporte des moyens d'indexation angulaire par rapport à l'axe transversal du piston de manière à permettre d'usiner la surface concave de développement en fonction des paramètres de la nappe d'injection associée de l'injecteur ;
- la surface concave de développement formant la zone évidée est réalisée par tournage suivant un axe vertical B-B d'usinage décalé d'une distance d déterminée par rapport à l'axe principal A-A ;
- la surface concave de développement formant la zone évidée est réalisée par fraisage ;
- l'axe vertical de symétrie A-A du bol de combustion est confondu avec l'axe X-X du cylindre ;
- l'axe vertical de symétrie A-A du bol de combustion est excentré par rapport à l'axe X-X du cylindre de manière à réduire la distance entre l'axe principal A-A du bol et un axe vertical de référence passant par le sommet O de la nappe d'injection.

D'autres caractéristiques et avantages de l'invention apparaîtront à la lecture de la description détaillée qui suit pour la compréhension de laquelle on se reportera aux figures annexées parmi lesquelles :
- la figure 1 est une vue schématique en coupe axiale d'un cylindre de moteur à combustion interne comportant un piston muni d'un bol de combustion selon l'état de la technique ;
- la figure 2 est une vue schématique en coupe axiale d'un cylindre de moteur à combustion interne comportant un piston muni d'un bol de combustion comportant un bossage dont la paroi externe comporte une zone excavée délimitée par une surface concave selon l'invention ;
- la figure 3 est une vue schématique en perspective du piston selon la figure 2 qui représente en détail le bossage central du bol de combustion comportant la surface concave de développement s'étendant sur un secteur angulaire déterminé.

Dans la description et les revendications, on utilisera à titre non limitatif les expressions telles que "supérieur" et "inférieur" et les orientations "axiale" et "transversale" en référence aux figures et définitions données dans la description.

De plus, les éléments identiques, similaires ou analogues seront désignés par les mêmes chiffres de référence.

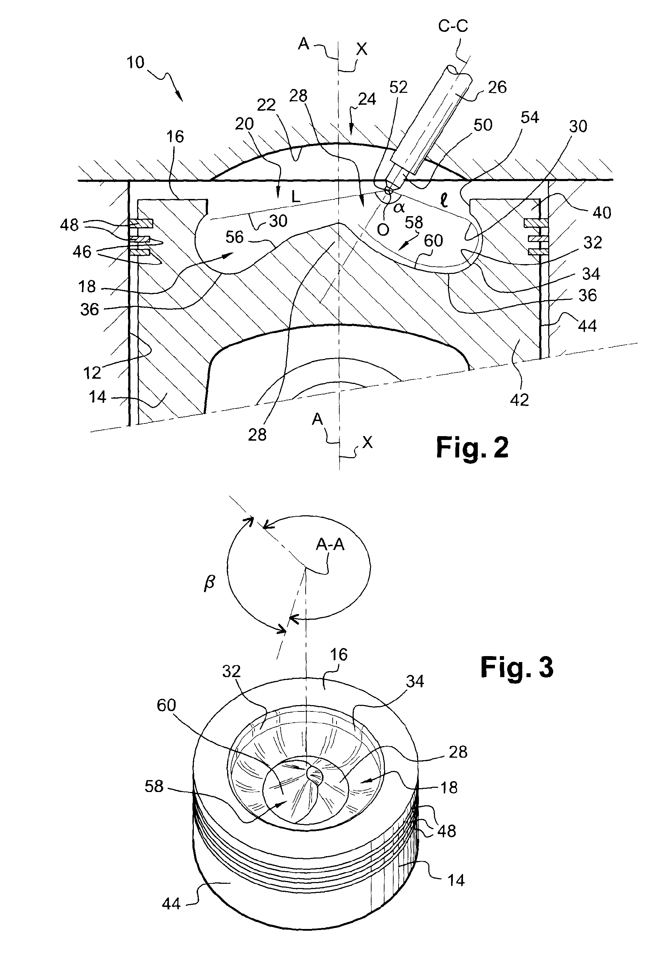

On décrira ci-après par comparaison avec la figure 1 illustrant l'état de la technique, la figure 2 qui, analogue, représente une partie du moteur à combustion interne 10 du type à injection directe et plus particulièrement l'un 12 des cylindres du moteur.

Le cylindre 12 s'étend axialement suivant un axe vertical X-X et délimite un alésage interne dans lequel coulisse axialement le piston 14 selon un mouvement de va-et-vient.

Le piston 14 comporte axialement une tête supérieure 40 et une jupe inférieure 42, la paroi cylindrique externe 44 de la tête 40 comportant des gorges annulaires périphériques 46 qui reçoivent des segments 48.

Le piston 14 comporte dans sa face horizontale supérieure 16 le bol de combustion 18, encore appelée cavité, qui délimite axialement la partie inférieure de la chambre de combustion 20 dont la partie supérieure est délimitée par une portion de la face inférieure 22 de la culasse 24 du moteur.

La culasse 24 comporte au moins un conduit d'admission d'air qui débouche par un orifice d'entrée obturé par une soupape d'admission (non représentés) dans la chambre de combustion 20, et au moins un conduit d'échappement des gaz brûlés qui débouche par un orifice de sortie destiné à être obturé par une soupape d'échappement (non représentée) dans la chambre de combustion 20.

La culasse 24 porte au moins un injecteur 26 de carburant qui est excentré ou décentré par rapport à l'axe vertical X-X du cylindre 12 de manière à permettre notamment l'implantation de soupapes de grand diamètre.

L'injecteur 26 est muni d'une buse d'injection 50 qui débouche directement dans la chambre de combustion 20 du moteur et comporte des trous d'injection 52 pour pulvériser le carburant en direction du bol de combustion 18.

Les trous 52 sont par exemple agencés axialement sur une rangée unique et repartis annulairement par rapport à l'axe principal C-C de l'injecteur autour de la buse d'injection 50.

Avantageusement, le nombre de trous 52 est supérieur ou égal à 6 et les trous 52 sont de préférence répartis angulairement de manière régulière autour de l'axe principal C-C de l'injecteur 26.

Avantageusement, pour que l'injection de carburant soit effectuée le plus près possible de l'axe X-X du cylindre 12 dans lequel coulisse le piston 14, la buse 50 de l'injecteur 26 est ici rapprochée de l'axe X-X du cylindre, en inclinant l'axe principal C-C de l'injecteur 26 par rapport à l'axe vertical X-X du cylindre 12.

Le carburant est pulvérisé par les trous 52 sous la forme d'une nappe d'injection 28 sensiblement conique qui est constituée par l'ensemble des jets 30 de carburant issus des trous 52.

Le bol de combustion 18 comporte une gorge annulaire latérale 34 qui est centrée sur un axe principal de symétrie A-A.

L'axe principal de symétrie A-A s'étend ici verticalement, c'est coaxialement à l'axe X-X du cylindre 12. De préférence, l'axe vertical de symétrie A-A du bol de combustion 18 est confondu avec l'axe X-X du cylindre 12.

Le bol de combustion 18 comporte un fond 36 sensiblement horizontal de profondeur constante à partir duquel s'étend verticalement, ici centralement, le bossage 50.

Par "profondeur", on entend ici à la côte axiale comprise entre le fond 36 et le bord circulaire supérieur 54 qui délimite l'ouverture d'entrée du bol 18.

La nappe d'injection 28 présente un angle de nappe (α) déterminé correspondant à l'ouverture au sommet du cône et qui est notamment déterminé en fonction des paramètres du bol de combustion 18, tels que le diamètre ou la profondeur.

Les jets 30 dissymétriques parcourent respectivement une longueur "I" pour les jets courts et une longueur "L" supérieure pour les jets longs, c'est-à-dire des longueurs différentes avant d'entrer en contact avec la paroi interne 32 de la gorge annulaire 34 du bol de combustion 18.

Ainsi, les jets dissymétriques 30 s'étendent tous en direction du bol globalement à partir d'un point fictif, dit point d'origine O, qui est approximativement situé à l'extrémité de la buse 50 de l'injecteur 26.

Conformément à l'invention, le bossage 38 comporte dans sa paroi externe 56 une zone évidée 58 délimitée par une surface concave 60 s'étendant sur un secteur angulaire déterminé, centré sur l'axe principal A-A, qui correspond sensiblement au secteur angulaire de la nappe d'injection 28 comportant les jets 30 de plus courtes longueurs "I".

Avantageusement, la surface concave de développement 60 permet auxdits jets courts 30 de se développer ou déployer depuis la paroi interne 32 de la gorge 34 vers le bossage 38 du bol de combustion 18.

Comme on peut le voir sur la figure 3, la surface concave de développement 60 s'étend sur un secteur angulaire (β) déterminé, centré sur l'axe principal A-A, qui correspond sensiblement au secteur angulaire d'angle de la nappe d'injection 28.

La surface concave de développement 60 présente, en section par un plan de coupe vertical passant par l'axe principal A-A, un profil incliné dont la pente, s'inscrivant dans la continuité du fond horizontal 18, est déterminée de manière à éviter que les jets de plus courtes longueurs ne s'enroulent sur eux-mêmes en direction de la paroi interne 32 de la gorge 34.

La surface concave de développement 60 s'étend axialement sur tout ou partie de la hauteur du bossage 38.

Avantageusement, le piston 14 comporte des moyens d'indexation angulaire par rapport à l'axe transversal du piston sur lequel est rapporte la bielle du moteur de manière à permettre d'usiner avec précision la surface concave de développement 60 en fonction des paramètres de la nappe d'injection 28 associée de l'injecteur 26, en particulier du secteur angulaire correspondants aux jets courts 30.

Avantageusement, l'axe vertical de symétrie A-A du bol de combustion 18 est confondu avec l'axe X-X du cylindre et le bol de combustion 18 est usiné conventionnellement dans la face supérieure 16 du piston 14 par tournage.

De préférence, la surface concave de développement 60 formant la zone évidée 58 selon l'invention est réalisée par tournage suivant un axe vertical B-B d'usinage décalé d'une distance "d" déterminée par rapport à l'axe principal A-A.

En variante, la surface concave de développement 60 formant la zone évidée 58 est réalisée par fraisage, par exemple au moyen d'une fraise boule.

Par comparaison avec un bol de combustion 18 comportant un bossage 38 d'axe vertical général décentré par rapport à l'axe principal A-A du bol 18, le bol de combustion 18 et le bossage 38 selon l'invention sont avantageusement réalisé à un coût réduit notamment du fait que l'axe principal A-A constitue un axe de symétrie du bol 18 et du bossage 38 avant usinage de la surface concave 60.

En variante, l'axe vertical de symétrie A-A du bol de combustion 18 est excentré par rapport à l'axe X-X du cylindre 12 de manière à réduire la distance entre l'axe principal A-A du bol et un axe vertical de référence passant par le sommet ○ de la nappe d'injection 28 à partir duquel s'étendent les jets 30.

Avantageusement, le moteur 10 comporte des moyens pour produire à l'admission un mouvement tourbillonnaire ordonné du type "swirl" dans le cylindre 12.

## Revendications

1. Moteur (10) à combustion interne à injection directe, comportant au moins un cylindre (12) d'axe vertical (X-X) dans lequel coulisse axialement un piston (14) qui comporte, dans sa face supérieure (16), un bol de combustion (18) délimitant la partie inférieure d'une chambre de combustion (20) dont la partie supérieure est délimitée par une portion en vis-à-vis de la face inférieure (22) d'une culasse (24) qui porte un injecteur (26) qui est excentré par rapport à l'axe (X-X) et qui pulvérise le carburant sous la forme d'une nappe d'injection (28) sensiblement conique formée de plusieurs jets dissymétriques (30) qui parcourent des longueurs différentes avant d'entrer en contact avec la paroi interne (32) du bol de combustion (18) constituée par une gorge annulaire latérale (34) qui, centrée sur un axe principal de symétrie (A-A), se raccorde avec un fond (36) sensiblement horizontal à partir duquel s'étend verticalement un bossage (38), **caractérisé en ce que** le bossage (38) comporte dans sa paroi externe (56) une zone évidée (58) délimitée par une surface concave (60) s'étendant sur un secteur angulaire (β) déterminé, centré sur l'axe principal A-A, qui correspond sensiblement au secteur angulaire de la nappe d'injection (28) comportant les jets (30) de plus courtes longueurs de manière à permettre auxdits jets (30) de se développer de la paroi interne (32) depuis la gorge (34) vers le bossage (38) du bol de combustion (18).

2. Moteur (10) selon la revendication 1, **caractérisé en ce que** la surface concave de développement (60) présente, en section par un plan de coupe vertical passant par l'axe principal (A-A), un profil incliné dont la pente s'inscrivant dans la continuité du fond horizontal (36) est déterminée de manière à éviter que les jets (30) de plus courtes longueurs ne s'enroulent sur eux-mêmes en direction de la paroi interne (32) de la gorge (34).

3. Moteur (10) selon la revendication 2, **caractérisé en ce que** la surface concave de développement (60) s'étend axialement sur tout ou partie de la hauteur du bossage (38).

4. Moteur (10) selon l'une quelconque des revendications précédentes, **caractérisé en ce que** le piston (14) comporte des moyens d'indexation angulaire par rapport à l'axe transversal du piston de manière à permettre d'usiner la surface concave de développement 60 en fonction des paramètres de la nappe d'injection (28) associée de l'injecteur (26).

5. Moteur (10) selon l'une quelconque des revendications précédentes, **caractérisé en ce que** la surface concave de développement (60) formant la zone évidée (58) est réalisée par tournage suivant un axe vertical (B-B) d'usinage décalé d'une distance (d) déterminée par rapport à l'axe principal (A-A).

6. Moteur (10) selon l'une quelconque des revendications précédentes, **caractérisé en ce que** la surface concave de développement (60) formant la zone évidée (58) est réalisée par fraisage.

7. Moteur (10) selon l'une quelconque des revendications précédentes, **caractérisé en ce que** l'axe vertical de symétrie (A-A) du bol de combustion (18) est confondu avec l'axe (X-X) du cylindre (12).

8. Moteur (18) selon l'une quelconque des revendications précédentes, **caractérisé en ce que** l'axe vertical de symétrie (A-A) du bol de combustion (18) est excentré par rapport à l'axe (X-X) du cylindre (12) de manière à réduire la distance entre l'axe principal (A-A) du bol et un axe vertical de référence passant par le sommet (O) de la nappe d'injection (28).
